# EUROPEAN PATENT APPLICATION

(11) **EP 1 205 990 A2**
(43) Date of publication of application: **15.05.2002**
(21) Application number: 01126626.9
(22) Date of filing: 07.11.2001
(51) Int. Cl.: H01M 4/04, H01M 4/02, H01M 4/26, H01M 4/70, H01M 4/74

(54) **Method for producing electrodes for battery**

(30) Priority: 07.11.2000 JP 2000338668
(71) Applicant: MATSUSHITA ELECTRIC INDUSTRIAL CO., LTD., Kadoma-shi, Osaka 571-8501 (JP)
(72) Inventor: Watanabe, Masaru, Nishinomiya-shi, Hyogo 663-8180 (JP); Ueyama, Yasuhiro, Kadoma-shi, Osaka 571-0047 (JP); Kamikihara, Nobuyuki, Hirakata-shi, Osaka 573-0066 (JP); Takeuchi, Ichiro, Yokohama-shi, Kanagawa 245-0061 (JP)
(74) Representative: Grünecker, Kinkeldey, Stockmair & Schwanhäusser Anwaltssozietät

(57) **Abstract**

A method of producing electrodes for a battery,
characterized by comprising the steps of:
applying an active material (5) on both sides of a current collector (2), which is obtained by subjecting a metal foil to three dimensional processing and has a thickness larger than that of the metal foil, by using a pair of dies (3) so as to form an active material layer on the same;
drying the active material layer; and
pressing the active material layer.

## Description

### [Detailed Description of the Invention]

### [Field of the Invention]

This invention relates to a method of producing electrodes for use in batteries such as nickel-hydrogen battery.

### [Related Art of the Invention]

As a method of producing electrodes for use in a nickel-hydrogen battery, there has been generally known a method in which a positive electrode is produced by filling a nickel foam metal, which is a current collector consisting of porous metal having three dimensional pores in communication with each other, with a coating consisting mainly of a nickel hydroxide powder, a binder and a solvent, drying the coating filled current collector, and pressure compressing the same.

The methods of filling a porous metal with a coating include, for example, the one disclosed in Japanese Patent Publication No. 7-73049.

And there has been generally known a method in which a negative electrode is produced by coating both sides of a current collector, which consists of a rolled nickel punching metal containing nickel about 60 µm thick, with a coating consisting mainly of a hydrogen absorbing alloy, a binder and a solvent, drying the coated current collector, and pressure compressing the same. The methods of coating a punching metal with a coating and of drying the coated punching metal include, for example, the one disclosed in Japanese Patent Laid-Open No. 9-117706.

In recent years, portable telephones and notebook computers excellent in portability have rapidly spread due to their utility, and there have been increasing demands that the capacity of the batteries for use in the above-described pieces of equipment be increased so as to allow them to be used for a longer period of time. However, in the use of the above-described current collector, the proportion of current collector to electrode plate is so large that there is a limit to the amount of active material that can be increased, which has interfered with the increase in the capacity of the batteries.

As measures to cope with the above problems, it is considered that it would be better to decrease the proportion of current corrective material to electrode plate by making the current corrective material a thin foil; however, in the method using the above nickel foam metal, simply decreasing the foil thickness gives rise to a problem of creating a variation in the thickness of the active material layers coated and formed on the front and back of the current collector and markedly destroying the flatness of the electrode plate due to the difference in elongation during pressing process. The reason why such a problem arises may be that the metal foil is deformed by the pressure of the coating ejected from a die since the mechanical strength of the metal foil is low and thereby a variation in coating thickness is created.

Further, in the method of using the above nickel punching metal which utilizes rolled nickel, a problem arises that the metal foil with a decreased thickness is deformed due to the heating carried out during the active material layer drying process, and in some cases, a problem fatal to the production of batteries may arise that the metal foil comes in contact with the tip of a die and thereby the current collector is cut off.

### SUMMARY OF THE INVENTION

This invention has been achieved in view of the above problems; accordingly, an object of this invention is to provide a method of producing electrodes for batteries in which a current collector of thin foil is coated with an active material coating and the active material coat is formed in such a manner as to ensure high productivity and which enables the improvement in capacity of batteries.

The 1st invention of the present invention is a method of producing electrodes for a battery, characterized by comprising the steps of:
applying an active material on both sides of a current collector, which is obtained by subjecting a metal foil to three dimensional processing and has a thickness larger than that of the metal foil, by using a pair of dies so as to form an active material layer on the same;
drying the active material layer; and
pressing the active material layer.

The 2nd invention of the present invention is the method of producing electrodes for a battery according to 1st invention,
characterized in that the thickness of said metal foil is in a range of 5 to 50 µm.

The 3rd invention of the present invention is the method of producing electrodes for a battery according to 1st invention,
characterized in that the thickness of the current collector having been subjected to three dimensional processing falls in the range shown by the equation t1 ≥ t2 ≥ t1/4, when t1 is the thickness of a electrode plate and t2 is the thickness of the current collector having been subjected to three dimensional processing.

The 4th invention of the present invention is the method of producing electrodes for a battery according to 1st invention,
characterized in that the thickness of the current collector having been subjected to three dimensional processing falls in the range shown by the equation d > t2 ≥ d/4, when d is the gap between the tips of the pair of dies and t2 is the thickness of the current collector having been subjected to three dimensional processing.

The 5th invention of the present invention is the method of producing electrodes for a battery according to 1st invention,
characterized in that said metal foil is electrolytic nickel foil.

The 6th invention of the present invention is a method of producing electrodes for a battery in which an active material coating for nickel-hydrogen battery is applied on a current collector using dies so as to form an active material layer,
characterized in that the active material coating flows inside the dies as well as between the tip of each die and the current collector at a shear rate of 500 (1/sec) or less.

The 7th invention of the present invention is the method of producing electrodes for a battery according to 1st or 6th inventions,
characterized in that the pressure of the active material coating between the tip of each die and the current collector is 0.5 MPa or lower.

The 8th invention of the present invention is the method of producing electrodes for a battery according to 1st or 6th inventions,
characterized in that the difference in thickness between the active material layer of the front and that of the back of the current collector is within the limits of ±30%.

The 9th invention of the present invention is the method of producing electrodes for a battery according to 1st or 6th inventions,
characterized in that the difference in thickness between the active material layer of the front and that of the back of the current collector is within the limits of ±10%.

### [Brief Description of the Drawings]

Fig. 1 is a structural view of a coater to which one embodiment of this invention is applicable.
Fig. 2 is a structural view of a coater to which one embodiment of this invention is applicable.
Fig. 3 is a structural view of a current collector obtained according to one embodiment of this invention.
Fig. 4 is a cross-sectional view of an electrode plate obtained according to one embodiment of this invention.
Fig. 5 is a graph showing viscosity characteristics of a coating according to one embodiment of this invention.
Fig. 6 is a graph showing cycle life characteristics of a battery obtained according to one embodiment of this invention.
Fig. 7 is a graph showing service capacity characteristics of a battery obtained according to one embodiment of this invention.

### [Description of Symbols]

1 Active Material Layer
2 Current Collector
3 Die
4 Position Regulating Instrument
5 Coating
6 Sump

### PREFERRED EMBODIMENTS OF THE INVENTION

In the following the present invention will be described in terms of the preferred embodiment.

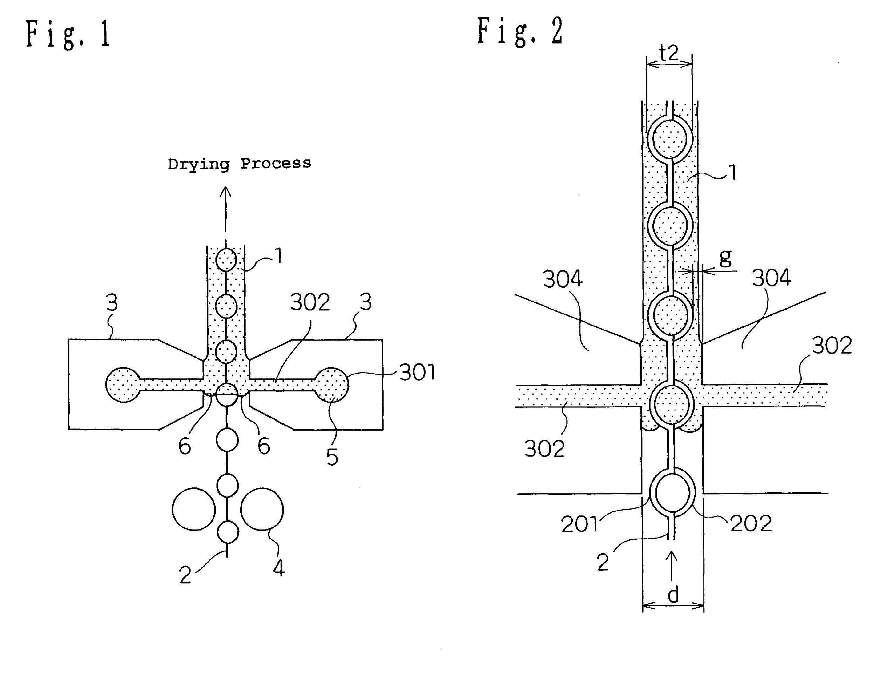

Fig. 1 is a schematic view of a coater according to this embodiment which is applicable to a method of producing electrodes for batteries of this invention.

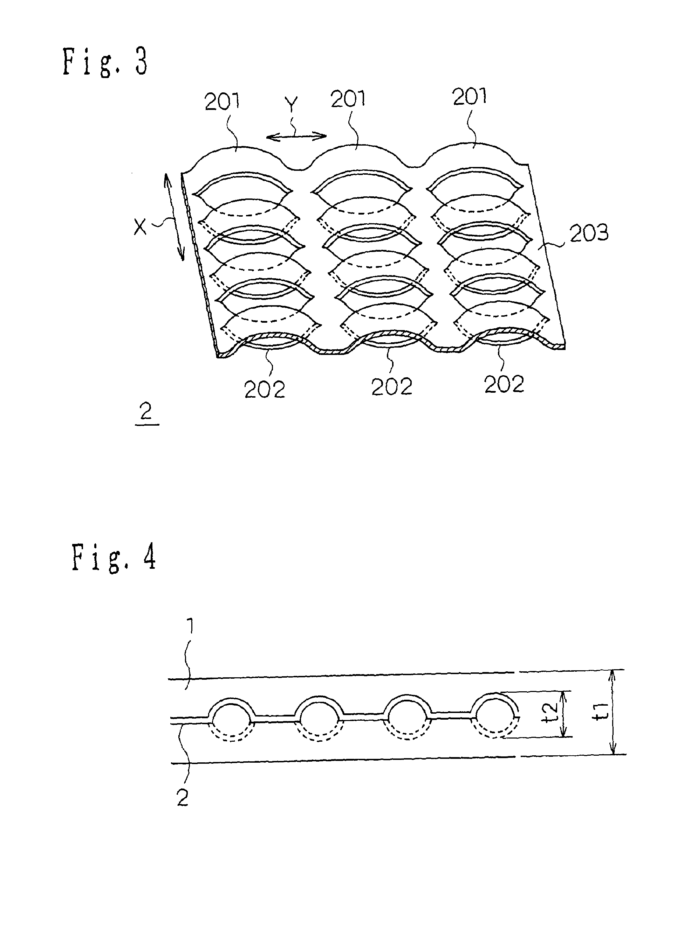

A current collector 2 is formed by processing the front and back of electrolytic nickel foil 203 t0 (5 to 50 µm) thick so as to have rectangular curbed portions 201 and 202 with prescribed dimensions which are projecting convexly and arranged parallel to each other in the direction X, as shown in Fig. 3. As means of processing the current collector 2, which is not shown in the drawing though, embossing using a die can be used. This three dimensional processing allows the current collector 2 to have a larger thickness than the foil does. The thickness of the current collector 2 shall be designated by t2 as described later.

The process of applying a coating on the current collector 2 is carried out while passing the current collector 2 through almost middle portion of a gap formed between a pair of dies 3, as shown in Figs. 1 and 2. To the pair of dies 3 a certain amount of active material coating 5 (hereinafter referred to as coating for short) is supplied with a pump (not shown in the figure). The coating 5 is first supplied to the inside of manifolds 301 where its pressure is uniformed in the transverse direction of the dies 3 coating, allowed to flow in slits 302, extruded from the tips of the dies 3, and applied on both sides of the current collector 2 in the transverse direction simultaneously and uniformly.

The thickness of the coating applied falls in the range shown by the equation t1 ≥ t2 ≥ t1/4, when t1 is the thickness of the electrode plate having been coated with an active material andt2 is the thickness of the current collector having been subjected to three dimensional processing. These are the conditions under which current flows sufficiently.

Position regulating instruments 4 for current collector which introduce the current collector 2 into almost middle portion of the gap may be provided on the upstream side relative to the dies 3 and, if necessary, on the downstream side relative to the same. The position regulating instrument 4 consists of a roll and a bar.

The current collector having had a coating 5 applied and an active material layer 1 formed thereon is dried in the drying process not shown in the figure, and then taken up. After that, the current collector is subjected to pressure compressing processing in the press working process not shown in the figure so as to be made into an electrode plate.

A first feature of this embodiment is that the current collector 2 having been subjected to three dimensional processing runs in the middle of the gap formed by the tips of the two dies since it is passed between the tips of the two dies. As a result, a variation in the amount of the coating of the active material layers 1 on the front and back of the current collector 2 becomes very small, whereby the flatness of the electrode plate after the press working becomes excellent.

In particular, as shown in Fig. 2, when the thickness of the current collector is in the range shown by the equation d > t2 ≥ d/4, wherein d is the gap between the tips of the two dies and t2 is the thickness of the current collector having been subjected to three dimensional processing, the gap g between the tip of each convex portion of the current collector 2 and the tip 304 of each die becomes small. Specifically, d is generally 0.05 mm or more and 3 mm or less. For example, when d is 0.6 mm and t2 is 0.4 mm, the gap g between the tip of each convex portion of the current collector 2 and the tip 304 of each die becomes as very small as 0.1 mm. Accordingly, the forces of viscosity the coating 5 existing in the gap g has inhibit the position of the current collector 2 from being unstable and thereby the current collector 2 is allowed to run in the middle of the gap d between the two dies.

In addition, since the gap g can also be maintained due to the forces of the viscosity of the coating, the tip 304 of each die and the current collector 2 never come in contact with each other; accordingly, even a current collector of which foil thickness is as thin as 5 to 50 µm and therefore mechanical strength is low can be produced stably without causing cut off thereof.

A second feature of this embodiment is that the thickness of the current collector falls in the range shown by the equation t1 ≥ t2 ≥ t1/4, when t1 is the thickness of the electrode plate and t2 is the thickness of the current collector having been subjected to three dimensional processing. If an active material is coated so thick that the thickness of the current collector does not fall in the above range, a problem arises that electric current is hard to flow.

A third feature of this embodiment is to use electrolytic nickel foil. Foils used as a current collector can be divided into two major categories: rolled nickel foil and electrolytic nickel foil. At the time of using electrolytic nickel foil, a deformation can be inhibited from being caused in the foil by heating during the drying process for the active material layer, compared with when using rolled nickel foil. Specifically, the rolled nickel foil has a stressing strain caused during the rolling process, and the stressing strain in turn gives rise to warps in the foil when the foil is heated.

The use of the electrolytic nickel foil results in improvement in accuracy of electrode plate flatness, which in turn makes it easier to wind up positive and negative electrodes and separator, leading to marked improvement in quality and yield of batteries.

If the thickness of the current collector is more than 50 µm, it is difficult to increase the capacity of batteries, but on the other hand, if the thickness of the current collector is less than 5 µm, such a problem arises that the current collector cannot with stand the tension required for its running during the coating process, etc . and it is cut off. Accordingly, in this invention, preferably the thickness of the current collector is in the range of 5 to 50 µm. From the above viewpoint, more preferably the thickness of the current collector is in the range of 10 to 30 µm.

A fourth feature of this embodiment is that shear rate for the active material coating which flows inside of dies as well as between the tip of each die and the current collector is 500 (1/sec) or lower. The term "shear rate" herein used is defined as V/g, wherein g is the gap between the tip of each die and the current collector and V is the running speed of the current collector.

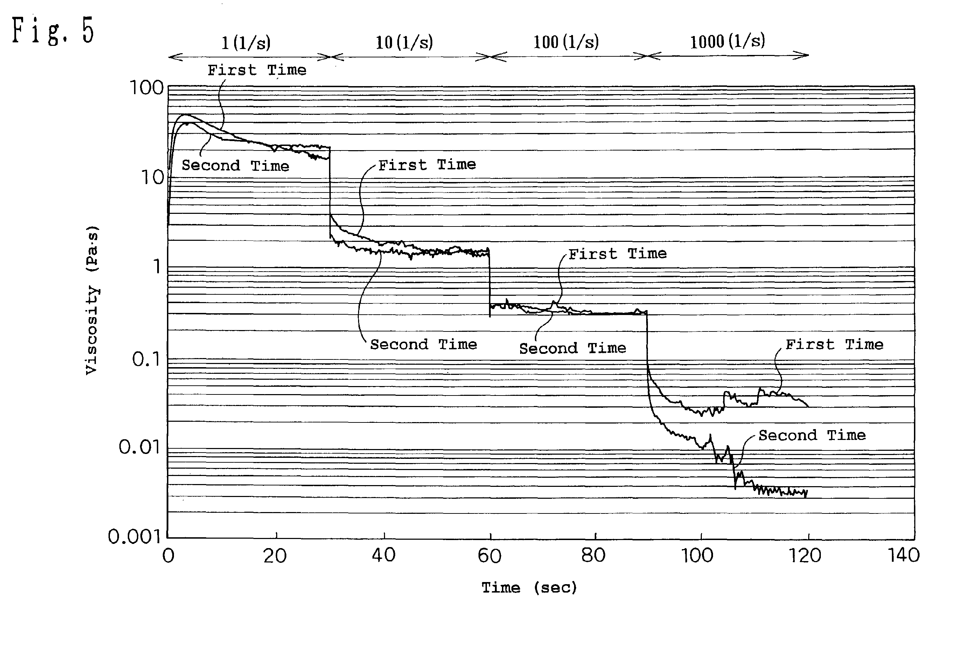

Fig. 5 shows viscosity characteristic of the coating used in this embodiment. Measurements were made using Reometer RF-2 manufactured by Reometrix Co., Ltd. equipped with a cone plate type measuring head.

In Fig. 5, measuring time (sec) is plotted in abscissa and viscosity (Pa·s) in ordinate. The changes of viscosity were measured while changing the shear rate at intervals of 30 seconds; 1 (1/sec), 10 (1/sec), 100 (1/sec) and 1000 (1/sec). Fig. 5 shows the results of two measurements.

As apparent from Fig. 5, at the shear rate of 1000 (1/sec), a variation is created every time a measurement is made and the value of viscosity is unstable.

After conducting an intensive investigation, the inventors have found that this phenomenon is observed in the coating system containing: powders with higher specific gravities, such as powders of nickel hydroxide and hydrogen absorbing alloys, as a main component; a binder, such as CMC and SBR, as small an amount as 3% or less; and 50% or more of solid content, that is, in the coating system for the nickel-hydrogen battery.

In the prior art method of producing electrodes in which an electrode plate is produced by filling a foam metal with a coating, since the pore diameter is in the range of 50 to 200 µm, the maximum shear rate reaches 1000 (1/s) at which the viscosity of the coating enters an unstable range. At the portion where the viscosity is high, pores are clogged, leading to imperfect filling of the coating. As a result, the filling of the coating becomes ununiform within the foam metal, causing problems fatal to the battery characteristics, such as creation of variations in battery capacity and in battery cycle life. In this invention, however, as long as shear rate is 500 (1/sec) or low, the viscosity of the coating is kept stable; accordingly, a uniform active material layer can be applied and formed on a current collector.

A fifth feature of this invention is that the pressure at the gaps is preferably kept proper. After the intensive investigation, the inventors have found that the pressure at the gaps is closely related to the phenomenon of unstable viscosity. When the pressure at the gaps is 0.5 MPa or less, more preferably 0.3 MPa or less, the phenomenon of unstable viscosity does not occur. This phenomenon may be attributed to the separation of powders and solvent caused by a high pressure at the gaps.

Just for reference, for the viscosity of the active material coating for the nickel-hydrogen battery, viscosity η1 at a shear rate of 1 (1/sec) is in the range of 1 to 100 (Pa·s) and viscosity η2 at a shear rate of 100 (1/sec) is in the range of 1 (Pa·s) or less. The viscosity η1 less than 1 (Pa·s) permits the coat right after the coating to flow before it is dried, resulting in ununiform thickness of the active material layer. The viscosity η1 more than 100 (Pa·s) is not preferable, either, because it does not permit the coat to flow well, and moreover, it permits the phenomenon of instable viscosity to be remarkable at a shear rate of 1000 (1/sec), as described above. If the viscosity η2 at a shear rate of 100 (1/sec) is more than 1 (Pa·s), the pressure of the coating at the gaps between the current collector and the dies becomes higher than 0.5 MPa during the coating process with the dies, which means that coating with the dies becomes impossible.

With the above-described characteristics, this embodiment provides such accurate electrode plates that the difference in thickness between the active material layer of the front and that of the back of the current collector is within the limits of ±30% to ±10%. Such a small difference in thickness of the active material layer results in a small difference in shrinkage, which is caused during the drying process, between the coat on the front and that on the back of the current collector. This enables the production of flat electrode plates, and furthermore, enables the improvement in flatness of electrode plates during press compressing process.

The prior art methods of producing electrodes for batteries only provide flatness with accuracy within ±3 mm; but on the other hand, the method of this invention provides an improved flatness with accuracy as high as within ±1 mm and makes possible improvement in capacity of batteries and cycle characteristics of the same. Further, with the above-described difference in thickness of the active material layers, the degree of the electrode plate curvature can be restricted to have a radius of curvature within 1000 mm. This makes easier the winding of the electrode plates and makes possible improvement in quality of batteries.

### [Example]

This embodiment will be described in further detail giving a concrete example. An active material was applied simultaneously on both sides of a current collector, which was electrolytic nickel foil 25 µm thick and 500 mm wide having been subjected to the processing shown in Fig. 3, using a coating head consisting of two dies arranged in such a manner as to face each other keeping a prescribed slit gap between them, so as to form active material layers thereon. And for comparison, the active material was applied simultaneously on both sides of a current collector, which is nickel foil 25 µm thick not having been subjected to any processing, using the same coating head as above, so as to form active material layers thereon.

The coating for a negative electrode was prepared by kneading a hydrogen absorbing alloy, SBR, CMC and water while setting the kneading conditions and the amount of water added in such a manner as to give a viscosity η1 of 50 (Pa·s) at a shear rate of 1 (1/sec) and a viscosity η2 of 0.5 (Pa·s) at a shear rate of 100 (1/sec). For comparison, the coating having viscosity not in the same range as that of this invention was prepared in such a manner as to give a viscosity η1 of 0.5 (Pa·s) at a shear rate of 1 (1/sec) and a viscosity η2 of 0.5 (Pa·s) at a shear rate of 100 (1/sec).

The coating for a positive electrode was prepared by kneading a nickel hydroxide, an electrically conductive agent, fluorocarbon resin, CMC and water while setting the kneading conditions and the amount of water added in such a manner as to give a viscosity η1 of 30 (Pa·s) at a shear rate of 1 (1/sec) and a viscosity η2 of 0.7 (Pa·s) at a shear rate of 100 (1/sec). For comparison, the coating having viscosity not in the same range as that of this invention was prepared in such a manner as to give a viscosity η1 of 0.8 (Pa·s) at a shear rate of 1 (1/sec) and a viscosity η2 of 0.7 (Pa·s) at a shear rate of 100 (1/sec).

The electrodes obtained by using the above coatings were press compressed and cut to have a prescribed width, so as to form nickel hydrogen batteries. The evaluation was made for each of the obtained batteries to verify the advantages of this invention.

### (1) Uniformity of Coating

The difference in thickness between the front and back of each current collector was checked with a micrometer and the presence of the coat sag after coating was checked visually. In the above example in which the viscosity of the coating was in the same range as that of this invention, the thickness difference was within ±18%; but on the other hand, in the comparative example, the thickness difference was within ±56%.

### (2) Presence of Sag after Coating

In the coats of the example, no sag was observed and their conditions were satisfactory; but on the other hand, in the coats of the comparative example, sags occurred and their flatness was markedly destroyed.

### (3) Flatness of Electrode Plate

At the time of having pressed the electrode plates obtained in the example, their flatness was within the range of ±0.5 mm; but on the other hand, in the electrode plates obtained in the comparative example, their flatness was as large as ±3.5 mm. Accordingly, in the electrode plates of the example, there arose no problem in winding them so as to insert them into a battery case and the yield was 98%. However, in the electrode plates of the comparative example, winding them was very difficult and the yield was as low as 50%.

### (4) Battery Characteristics

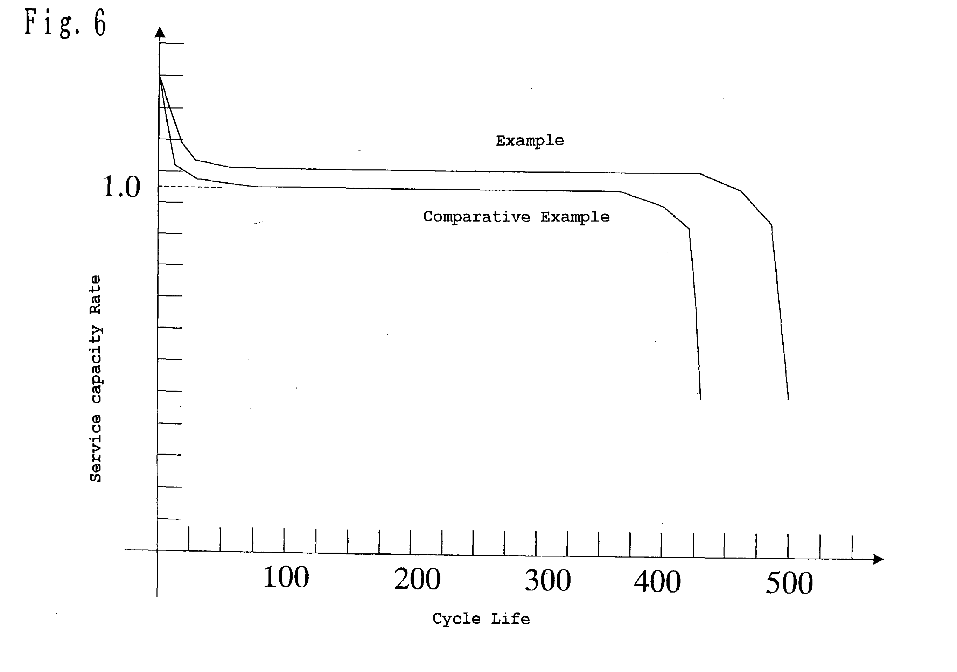

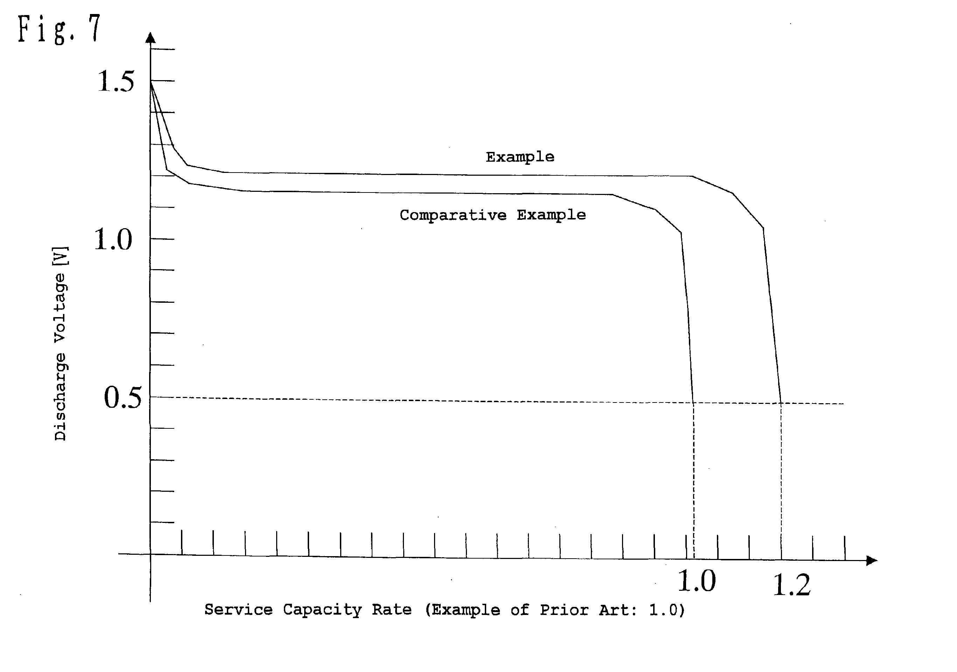

The cycle life of each of the batteries obtained in the above example and the above comparative example was shown in Fig. 6 and the service capacity rate of the same in Fig. 7. In the battery of the above example, the cycle life was improved by 20% compared with that of the comparative example. And the service capacity rate was also improved by 20% compared with that of the comparative example.

The same effects as described above were obtained in the embodiments other than the above-described one as long as they were within the scope of this invention defined by the appended claims. As described so far, according to this example, a coating can be applied to a current collector consisting of electrolytic nickel foil in such a manner as to ensure high productivity of batteries, and at the same time, in a uniform manner, which enables the improvement in flatness of electrode plates, the improvement in and inhibition of a variation in service capacity, and the improvement in the cycle characteristic.

As apparent from the description so far, according to this invention, coating of a current collector can be carried out in such a manner as to ensure high productivity of batteries , and at the same time, in a uniform manner, which enables the improvement in flatness of electrode plates, in service capacity, and in the cycle characteristic. Thus this invention offers a number of advantages.

## Claims

1. A method of producing electrodes for a battery, **characterized by** comprising the steps of:
applying an active material on both sides of a current collector, which is obtained by subjecting a metal foil to three dimensional processing and has a thickness larger than that of the metal foil, by using a pair of dies;
drying the active material layer; and
pressing the active material layer.

2. The method of producing electrodes for a battery according to claim 1,
**characterized in that** the thickness of said metal foil is in a range of 5 to 50 µm.

3. The method of producing electrodes for a battery according to claim 1,
**characterized in that** the thickness of the current collector having been subjected to three dimensional processing falls in the range shown by the equation t1 ≥ t2 ≥ t1/4, when t1 is the thickness of a electrode plate and t2 is the thickness of the current collector having been subjected to three dimensional processing.

4. The method of producing electrodes for a battery according to claim 1,
**characterized in that** the thickness of the current collector having been subjected to three dimensional processing falls in the range shown by the equation d > t2 ≥ d/4, when d is the gap between the tips of the pair of dies and t2 is the thickness of the current collector having been subjected to three dimensional processing.

5. The method of producing electrodes for a battery according to claim 1,
**characterized in that** said metal foil is electrolytic nickel foil.

6. A method of producing electrodes for a battery in which an active material coating for nickel-hydrogen battery is applied on a current collector using dies so as to form an active material layer,
**characterized in that** the active material coating flows inside the dies as well as between the tip of each die and the current collector at a shear rate of 500 (1/sec) or less.

7. The method of producing electrodes for a battery according to claim 1 or 6,
**characterized in that** the pressure of the active material coating between the tip of each die and the current collector is 0.5 MPa or lower.

8. The method of producing electrodes for a battery according to claim 1 or 6,
**characterized in that** the difference in thickness between the active material layer of the front and that of the back of the current collector is within the limits of ±30%.

9. The method of producing electrodes for a battery according to claim 1 or 6,
**characterized in that** the difference in thickness between the active material layer of the front and that of the back of the current collector is within the limits of ±10%.
